# FASCICULE DE BREVET EUROPEEN

(11) **EP 1 341 679 B1**
(45) Date de publication et mention de la délivrance du brevet: **16.02.2005**
(21) Numéro de dépôt: 01990409.3
(22) Date de dépôt: 13.11.2001
(51) Int. Cl.: B60C 11/12

(54) **BANDE DE ROULEMENT DE PNEUMATIQUE ET ELEMENT MOULANT DE MOULE D'UNE TELLE BANDE**
REIFENLAUFFLÄCHE UND FORMELEMENT EINES FORMWERKZEUGS FÜR EINE SOLCHE LAUFFLÄCHE
TYRE RUNNING TREAD AND MOULDING ELEMENT OF A MOULD FOR SUCH A TREAD

(30) Priorité: 13.11.2000 FR 0014676
(43) Date de publication de la demande: 10.09.2003
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: RADULESCU, Robert, F-63170 Perignat les Sarlieve (FR); DE BENEDITTIS, Eric, F-63360 Saint-Beauzire (FR)
(74) Mandataire: Diernaz, Christian
(86) Numéro de dépôt international: PCT/EP2001/013118
(87) Numéro de publication internationale: WO 2002/038399

(56) Documents cités:
- EP-A- 0 911 187
- FR-A- 2 763 892
- US-A- 2 121 955
- PATENT ABSTRACTS OF JAPAN vol. 1995, no. 10, 30 novembre 1995 (1995-11-30) & JP 07 172111 A (BRIDGESTONE CORP), 11 juillet 1995 (1995-07-11)

## Description

L'invention concerne les bandes de roulement de pneumatiques et en particulier les sculptures de telles bandes ; elle concerne également un élément moulant destiné à équiper un moule pour mouler de telles bandes de roulement.

De manière connue, un pneumatique destiné à équiper un véhicule poids lourd comprend une armature de carcasse surmontée radialement à l'extérieur d'une armature de sommet elle même surmontée d'une bande de roulement dont la surface radialement à l'extérieur constitue la surface de roulement du pneumatique et est destinée à venir en contact avec la chaussée pendant le roulage de ce pneumatique. Pour satisfaire aux exigences d'adhérence et d'évacuation de l'eau au cours d'un roulage sur une chaussée mouillée, il est connu de pourvoir la bande de roulement avec une pluralité de rainures d'orientation essentiellement longitudinale (ou circonférentielle) et transversale (c'est-à-dire faisant un angle moyen différent de zéro avec la direction longitudinale) ; ces rainures délimitent des éléments de sculpture (nervures, blocs) présentant une face supérieure radialement à l'extérieur formant une partie de la surface de roulement de la bande de roulement et des faces latérales limitant lesdites rainures.

Pour certains types de pneumatiques de poids lourd et notamment ceux destinés à une utilisation sur sol enneigé, il est nécessaire d'augmenter la performance d'adhérence et de motricité desdits pneumatiques et ceci quel que soit leur niveau d'usure afin de conserver le plus longtemps possible les performances initiales aux dits pneumatiques. Pour augmenter l'adhérence d'un pneumatique, il est connu de réaliser au moins une incision (c'est-à-dire une découpure de largeur inférieure ou égale à 2 mm et ne créant pas véritablement de volume en creux dans la bande) sur une pluralité d'éléments de sculpture ; plus le nombre d'incisions est grand et plus le nombre d'arêtes formées sur la bande de roulement est grand et plus la performance d'adhérence est améliorée. Pour conserver le plus longtemps possible les performances d'adhérence de la bande de roulement au fur et à mesure de son usure, il est indispensable de prévoir des incisions qui aient des profondeurs égales ou très proches de la profondeur des rainures longitudinales (cette dernière profondeur pouvant définir l'épaisseur utile de la bande de roulement d'un point de vue de la quantité de gomme à user). Cette réalisation est malheureusement incompatible avec l'obtention d'éléments de sculpture ayant des rigidités satisfaisantes (principalement sous les efforts dans le contact avec la chaussée) et peut même, dans certaines conditions de roulage, conduire à des arrachements de gomme de la bande de roulement (fragilité des lames de gomme de faible épaisseur).

Une solution intermédiaire a été proposée et mise sur le marché par le déposant (sous l'appellation XDN) consistant à réaliser, dans les blocs de sculpture, des incisions s'étendant à partir de la surface de roulement à l'état neuf jusqu'à une profondeur sensiblement égale à la moitié de l'épaisseur de ladite bande. Bien entendu, si cette sculpture permet des performances satisfaisantes à l'état neuf et jusqu'à mi-usure, elle ne permet pas de conserver ces performances pendant toute la durée potentielle d'utilisation du pneumatique (c'est-à-dire jusqu'à usure complète de la bande de roulement) puisque les arêtes formées par les incisions disparaissent à partir d'une usure sensiblement égale à la moitié de l'épaisseur de la bande de roulement.

On connaît le document FR2763892 qui décrit une bande de roulement de pneumatique comprenant des éléments de sculpture pourvus d'incisions débouchant sur la surface de roulement et prolongés dans la profondeur de la bande par un canal destiné à former une nouvelle rainure après une usure partielle. Rien n'est précisé quant aux volumes de creux ainsi nouvellement formés.

Un objectif de la présente invention est de proposer une bande de roulement dont la sculpture permet d'atteindre une amélioration sensible des performances d'adhérence pendant toute la durée d'utilisation du pneumatique tout en obtenant une vitesse moyenne d'usure de la bande de roulement (perte moyenne d'épaisseur de bande de roulement en roulage) qui soit supérieure à la vitesse moyenne des pneumatiques pourvus d'incisions jusqu'à mi-profondeur.

Dans ce qui suit, le terme découpure peut désigner soit une rainure de largeur moyenne supérieure ou égale à 2 mm soit une incision de largeur moyenne inférieure à 2 mm ; dans un cas comme dans l'autre une découpure peut déboucher dans au moins une autre découpure, ou ne pas déboucher (découpure dite « aveugle ») ou ne déboucher que sur une découpure (découpure dite « borgne »).

Cet objectif est atteint avec une bande de roulement destinée à un pneumatique comprenant une armature de carcasse surmontée radialement à l'extérieur d'une armature de sommet elle même surmontée de cette bande de roulement en gomme dont la surface radialement à l'extérieur constitue la surface de roulement du pneumatique pour venir en contact avec la chaussée pendant le roulage du pneumatique. La bande de roulement a une épaisseur maximale Pb pouvant être usée en roulage et est pourvue d'une pluralité de découpures d'orientation essentiellement transversale.

Une bande de roulement selon un état de la technique est définie en ce que :
- à l'état neuf, certaines des découpures transversales forment sur la surface de roulement des zones en creux de largeur moyenne Lt supérieure ou égale à 2 mm et de profondeur maximale Pt au moins égale à 30% de l'épaisseur Pb de bande à user et au plus égale à 80% de la même épaisseur Pb, les autres découpures transversales formant sur la même surface de roulement des incisions de largeur moyenne Li' inférieure à 2 mm et de profondeur Pi comprise entre 30% et 80% de Pt;
- à l'état neuf, l'ensemble des zones en creux débouchant sur la surface de roulement constituent un volume total en creux V0 au moins égal à 10% du volume de la bande de roulement à user ;
- une pluralité des incisions se prolongeant, à partir de la profondeur Pi par des zones en creux de largeur moyenne Li" supérieure ou égale à 2 mm de telle sorte qu'après une usure homogène de la bande de roulement sensiblement égale à une épaisseur correspondant à la profondeur Pt des zones en creux débouchant sur la surface de roulement de la bande à l'état neuf, le volume V1 des zones en creux débouchant sur la nouvelle surface de roulement soit compris entre 50% et 150% du volume initial V0.

Avantageusement le volume V1 est au moins égal au volume V0 et compris entre 100% et 150% du volume initial V0.

Préférentiellement, la sculpture d'un pneumatique selon l'invention comprend en outre des rainures d'orientation circonférentielle de profondeur moyenne Pc pour faciliter le drainage de l'eau dans le cas de roulage sur chaussée recouverte d'eau et améliorer l'adhérence transversale. Le volume V0 des zones en creux est calculé en intégrant au volume des rainures transversales le volume des rainures longitudinales. La profondeur Pc correspond sensiblement à l'épaisseur Pb de bande à user en roulage.

Par épaisseur Pb de bande de roulement à user, on entend la limite d'usure de ladite bande à partir de laquelle il est souhaitable de procéder au renouvellement de cette bande, par exemple, par un procédé de rechapage.

Par rapport à l'état de la technique connu, le pneumatique selon l'invention permet une amélioration des performances d'adhérence pendant toute la durée d'utilisation du pneumatique. Le pneumatique selon l'invention permet d'avoir des performances à l'état neuf comparables à celles d'un pneumatique pourvu d'une pluralité d'arêtes venant en contact avec la chaussée tout en ayant une grande capacité d'évacuation (et de " stockage " par la fonction réservoir des zones en creux) grâce à la présence des rainures d'orientation longitudinale et grâce à la présence d'une pluralité de zones en creux d'orientation transversale qui présentent la caractéristique essentielle de ne pas se refermer dans le contact avec la chaussée. Ces performances sont obtenues en conservant à la bande de roulement une rigidité supérieure à celle que l'on aurait avec les mêmes découpures mais de même profondeur que les rainures longitudinales.

En outre, ces bonnes performances sont conservées pendant une grande partie de la durée possible d'utilisation correspondant à une usure maximale de la bande puisque après usure partielle (c'est-à-dire une usure affectant partiellement la bande de roulement dans son épaisseur) de nouvelles zones en creux débouchent sur la nouvelle surface de roulement pour devenir actives dans le contact du pneumatique avec la chaussée.

Avantageusement, les incisions sont délimitées par des parois principales comprenant des moyens pour réaliser un blocage mécanique d'une paroi sur l'autre ; dans ce but, les parois peuvent avoir des formes en zigzag ou ondulantes ou présenter des reliefs destinés à réaliser un blocage mécanique desdites parois l'une contre l'autre lors de l'écrasement de la bande de roulement afin d'empêcher une diminution sensible de la rigidité de cette bande ; de telles découpures sont notamment décrites dans le brevet US 5,783,002.

Une bande de roulement selon l'invention comprend au moins une nervure pourvue d'une pluralité de découpures, chaque découpure, vue sur la surface de roulement à l'état neuf, ayant :
- au moins une première partie de largeur supérieure à 2 mm et de profondeur Pt comprise entre 30% et 80% de la profondeur totale de ladite découpure, ladite partie formant une zone en creux étant prolongée dans l'épaisseur de la bande par au moins une partie de largeur inférieure à 2 mm formant une incision,
- au moins une deuxième partie de largeur inférieure à 2 mm et de profondeur comprise entre 30% et 80% de la profondeur totale de ladite découpure, cette deuxième partie formant une incision et étant dans le prolongement axial de la première partie, cette deuxième partie étant prolongée dans l'épaisseur de la bande par au moins une partie de largeur supérieure à 2 mm pour former une nouvelle zone en creux,
- l'ensemble des zones en creux débouchant sur la surface de roulement constituent un volume total en creux au moins égal à 10% du volume de la bande à user,
cette bande de roulement étant caractérisée en ce que après une usure homogène égale ou supérieure à la profondeur de la première partie, le volume total des zones en creux débouchant sur la surface de roulement est compris entre 80% et 150% du volume initial total des zones en creux débouchant sur la surface de roulement à l'état neuf.

Un autre objectif de l'invention est de proposer un élément moulant destiné à équiper un moule pour le moulage d'une bande de roulement selon l'invention.

L'élément moulant selon l'invention comprend une première et une seconde région, la première région étant destinée à être ancrée dans un moule de pneumatique comportant une surface de moulage et la seconde région étant située dans le prolongement de la première région de façon à faire saillie à la surface de moulage d'un moule pour mouler une découpure dans une bande de gomme. L'élément moulant est caractérisé en ce que la seconde région est formée d'une pluralité de parties minces d'épaisseur moyenne inférieure à 2 mm et d'une pluralité de parties épaisses d'épaisseur moyenne supérieure ou égales à 2 mm, au moins une partie mince étant prolongée suivant deux directions distinctes par des parties épaisses. Préférentiellement les directions distinctes sont perpendiculaires entre elles, l'une d'entre elles pouvant correspondre à la direction perpendiculaire à la surface de roulement de la bande à mouler.

Dans le cas d'un moule comportant un très grand nombre d'éléments moulants, il est judicieux de prévoir que les parties épaisses aient une épaisseur au moins égale à deux fois l'épaisseur des parties minces (pour obtenir un effet technique appréciable) et au plus égale à dix fois l'épaisseur des parties minces (pour permettre un démoulage aisé).

Avantageusement les surfaces des parties minces de l'élément moulant ont des géométries aptes à créer un engrènement des parois des incisions ; il est également intéressant de prévoir une rugosité non nulle afin de limiter les mouvements relatifs desdites parois.

D'autres caractéristiques et avantages de l'invention ressortent de la description faite ci-après en référence aux dessins annexés qui montrent, à titre d'exemples non limitatifs, des formes de réalisation de l'objet de l'invention.
Figure 1 : vue en plan d'une bande de roulement selon l'état de la technique ;
Figure 2 : vue en coupe selon II-II de la bande de roulement montrée à la figure 1 ;
Figure 3 : vue en coupe selon III-III de la bande de roulement montrée à la figure 1 ;
Figure 4 : vue en plan partielle d'une bande de roulement selon une deuxième variante ;
Figure 5 : vue en coupe suivant V-V de la deuxième variante de bande de roulement ;
Figure 6 : vue en coupe suivant VI-VI de la deuxième variante de bande de roulement;
Figure 7 : vue en plan partielle de la bande de roulement de la deuxième variante après usure ;
Figure 8 : vue d'un élément moulant selon l'invention destiné à équiper un moule moulant une bande de roulement.

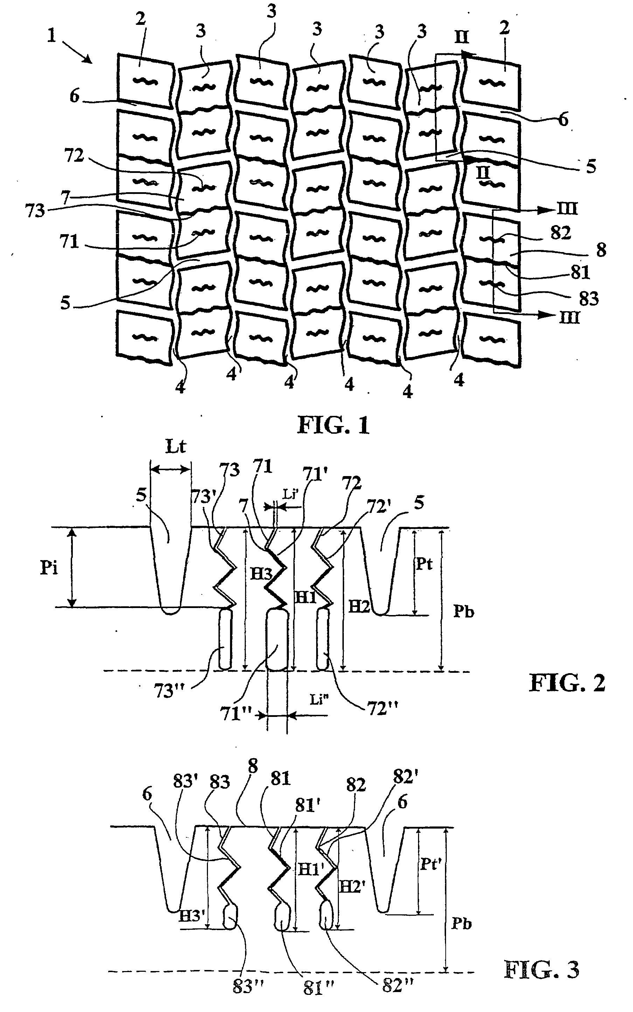

La figure 1 montre en plan la surface de roulement d'une bande de roulement 1 d'un pneumatique de dimension 315/80 R 22.5 à l'état neuf. La bande de roulement 1 comprend sept rangées circonférentielles de blocs délimités par des rainures d'orientation principale longitudinale 4 (circonférentielle sur le pneumatique) et transversale 5, 6 ; les blocs 2 des rangées bords de la bande ont une configuration qui est différente des blocs des cinq rangées centrales.

Les rainures d'orientation principale longitudinale 4 ont une largeur moyenne égale à 5 mm et une profondeur maximale égale à 23 mm.

Les rainures transversales 5 séparant les blocs 3 des rangées centrales ont une profondeur égale à 19 mm et une largeur moyenne égale à 8 mm à la surface de la bande à l'état neuf, cette largeur se réduisant progressivement à 4 mm vers le fond desdites rainures 5. La distance moyenne séparant deux rainures transversales 5 successives est égale à 52 mm.

Les cinq rangées centrales sont similaires entre elles au décalage circonférentiel près mis en oeuvre pour réduire le bruit en roulage émis par cette sculpture.

Chacun des blocs 3 des cinq rangées centrales comprend trois découpures 71 , 72, 73 débouchant sur la surface de roulement 7 à l'état neuf; ces trois découpures ont des profondeurs respectivement H1, H2, H3 égales dans le cas présent à la profondeur Pb de bande à user (Pb = 30 mm) . Une première découpure 71 partage chaque bloc 3 en deux parties sensiblement égales et débouche sur la surface de roulement 7 et dans les deux rainures longitudinales 4 jouxtant ledit bloc 3. De part et d'autre de cette première découpure 71, sont prévues deux autres découpures 72, 73 débouchant uniquement sur la surface de roulement 7 à l'état neuf et non dans les rainures longitudinales. Les profondeurs totales de ces découpures 71, 72, 73 sont supérieures à la profondeur Pt des rainures longitudinales 4 et dans le cas présent elles sont égales à 30 mm.

Comme cela est visible sur la figure 2, montrant une coupe selon II-II réalisée dans l'épaisseur d'un bloc 3 de la bande de roulement montrée à la figure 1, la découpure 71 divisant chaque bloc 3 des rangées centrales en deux parties est formée d'une première incision 71' de largeur moyenne Li' sensiblement égale à 0.4 mm et prolongée à partir d'une profondeur égale à 14 mm par une zone en creux 71". Cette zone en creux 71" se présente sous la forme d'un canal de largeur Li" égale à 4 mm débouchant dans les rainures transversales 4 délimitant le bloc 3, ledit canal s'étendant sur une profondeur égale à 16 mm.

Chacune des découpures 72, 73 prévues de part et d'autre de la découpure 71 est formée par une incision aveugle c'est-à-dire ne débouchant pas dans les rainures transversales 4, respectivement 72', 73', de largeur moyenne sensiblement égale à 0.4 mm et prolongée à partir d'une profondeur égale à 14 mm par une zone en creux, respectivement 72" et 73". Ces zones en creux, de largeur égale à 2 mm, sont également aveugles puisqu'elles ne débouchent pas dans les rainures transversales 4 délimitant le bloc 3. Les dimensions des parties en creux 71", 72", 73" sont déterminées de manière à retrouver, après une usure de la bande de roulement supérieure ou égale à la profondeur des rainures transversales 5 formées sur la bande de roulement à l'état neuf, un volume de creux total sensiblement identique voire même supérieur au volume de creux correspondant auxdites rainures transversales 5.

Pour réduire le plus possible l'incidence de la présence des découpures sur la rigidité de chaque bloc 3, les parois délimitant les parties des découpures formant des incisions 71', 72', 73' comportent une pluralité de motifs en relief et en creux, les reliefs d'une paroi étant destinés à coopérer avec les creux de la paroi en vis-à-vis.

Il est bien sûr possible de réaliser des découpures 71, 72, 73 ayant des profondeurs totales différentes pouvant de plus être supérieures à la profondeur Pb ; de même ces découpures peuvent avoir des incisions de profondeurs et/ou de largeurs différentes.

En ce qui concerne les deux rangées situées latéralement au bord de la bande de roulement, la figure 3 montre une coupe selon III-III dans l'épaisseur d'un bloc 2 d'un bord de la bande de roulement montrée à la figure 1. Chaque bloc de gomme 2 est délimité longitudinalement par des rainures d'orientation principale transversale 6 de largeur moyenne égale à 8 mm à la surface de la bande à l'état neuf et se réduisant progressivement à 4 mm vers le fond desdites rainures ; la profondeur Pt' des rainures transversales 6 est égale à 16 mm. La distance moyenne séparant deux rainures transversales 6 successives est égale à 52 mm.

Chacun des blocs 2 des deux rangées bord comprend trois découpures 81, 82, 83 débouchant sur la surface de roulement à l'état neuf. Une première découpure 81 partage chaque bloc 2 en deux parties sensiblement égales et débouche à la fois sur la surface de roulement 8, dans une rainure longitudinale 4 jouxtant ledit bloc 2 et axialement vers l'extérieur de la bande. De part et d'autre de cette première découpure 81, sont prévues deux autres découpures 82 , 83 débouchant uniquement sur la surface de roulement 8 à l'état neuf et non dans la rainure longitudinale 4 ou axialement à l'extérieur de la bande. La profondeur totale de chacune de ces découpures est dans le cas présent égale à 21 mm.

Comme cela est visible sur la figure 3, la première découpure 81, de profondeur totale H1' égale à 21 mm, divise chaque bloc 2 des rangées bord en deux parties et est formée d'une première incision 81' de largeur moyenne sensiblement égale à 0.4 mm et prolongée à partir d'une profondeur égale à 13 mm par une zone en creux 81". Cette zone en creux 81" est formée par un canal de largeur égale à 3 mm débouchant dans une rainure longitudinale délimitant le bloc et vers l'extérieur de la bande et s'étendant sur une profondeur égale à 8 mm.

Les découpures 82, 83, de profondeur respectivement H2', H3' toutes deux égales à H1', sont réalisées de part et d'autre de cette première découpure 81 sont formées par une incision ne débouchant pas latéralement, respectivement 82', 83', de largeur moyenne sensiblement égale à 0.4 mm prolongée à partir d'une profondeur égale à 13 mm par une zone en creux respectivement 82", 83". Ces zones en creux, de largeur égale à 3 mm, sont également borgnes puisqu'elles ne débouchent pas latéralement à l'extérieur du bloc 2. Les dimensions des parties en creux 81", 82", 83" sont choisies (pour chaque blocs des rangées des bords de la bande de roulement) de manière à retrouver, après une usure de la bande de roulement supérieure ou égale à la profondeur Pt (dans le cas présent Pt = 16 mm) des rainures transversales 6 présentes à l'état neuf, un volume de creux, sur chaque rangée du bord de la bande de roulement, sensiblement identique voire supérieur au volume de creux correspondant auxdites rainures transversales 6 à l'état neuf.

Des essais comparatifs ont été réalisés sur des pneumatiques de dimension 315/80 R 22.5 de même structure interne et différant uniquement par leurs bandes de roulement. Le pneumatique servant de témoin (dont les résultats sont pris pour base 100) correspond au pneumatique commercialisé sous la marque XDN tandis que le pneumatique selon l'invention est pourvu d'une bande de roulement correspondant à la bande de roulement décrite plus haut avec le support des figures 1 à 3.

Conditions de roulage :
- pression 7.5 bars,
- charge de 3000 kg,
- vitesse moyenne de 70 km/h,
- pneumatique équipant les quatre positions d'un essieu moteur d'un véhicule poids lourd,

| Test | Témoin XDN | Invention |
|---|---|---|
| Usure | 100 (99531 km) | 160 (166882 km) |
| Adhérence neuf | 100 | 100 |
| Adhérence usure 10 mm | 100 | 117 |
| Adhérence usure 17 mm | 100 | 122 |

Dans le test d'usure réalisé sur piste, on mesure la perte de poids moyenne après un kilométrage donné : pour une perte en poids identique on note que le pneumatique selon l'invention permettent d'atteindre un kilométrage supérieur à 1.5 fois le kilométrage du pneumatique de référence choisi.

Dans le test d'adhérence, on mesure la performance sur piste recouverte d'eau (2 mm) en mesurant la distance de freinage.

Outre l'amélioration de performance constatée en usure régulière, usure irrégulière et le maintien voire l'amélioration de la performance en adhérence sur sol mouillé, la sculpture selon l'invention permet d'atteindre des températures de fonctionnement dans la gomme de la bande qui sont inférieures de plusieurs degrés centigrades par rapport au pneumatique témoin.

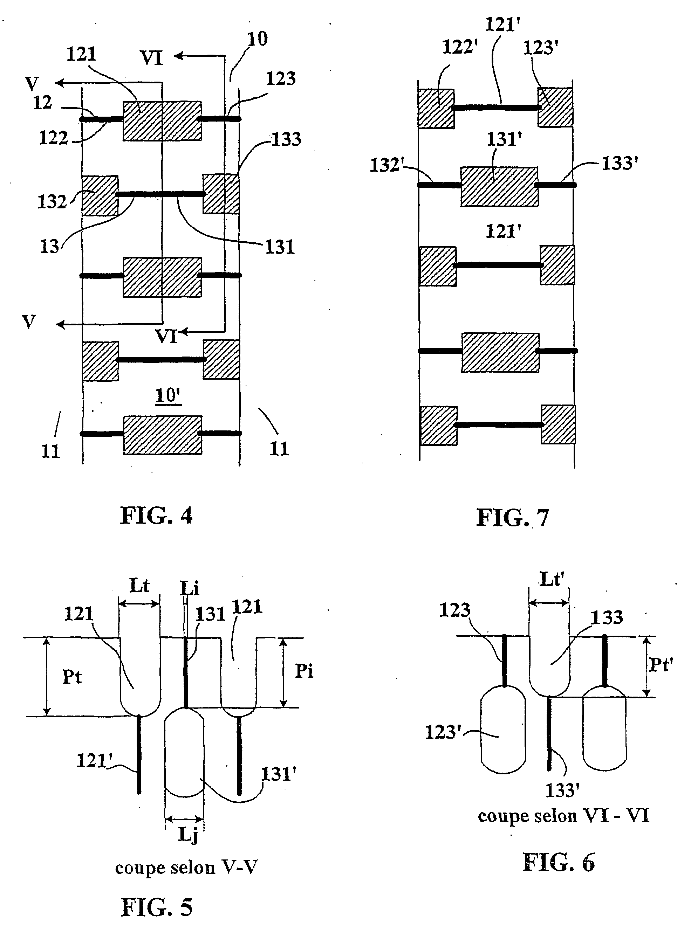

Dans une deuxième variante, une bande de roulement selon l'invention comprend une pluralité de nervures longitudinales délimitées par des rainures orientées longitudinalement. La figure 4 montre en plan une vue partielle de la surface de contact 10' (destinée à venir en contact avec la chaussée) d'une nervure 10 délimitée par deux rainures longitudinales 11, cette nervure étant pourvue d'une pluralité de découpures 12, 13 orientées transversalement et régulièrement espacées dans la direction longitudinale.

Toutes les découpures 12, 13 formées sur cette nervure 10 débouchent sur la surface de contact 10' de la nervure avec la chaussée et latéralement sur les bords de la nervure dans les rainures longitudinales 11.

Une première série de découpures comprend une pluralité de découpures 12 présentant à partir de la surface de roulement de la nervure 10 une partie médiane 121 de largeur Lt égale à 8 mm et de profondeur Pt égale à 12 mm pour former une zone en creux, cette partie médiane 121 étant prolongée latéralement par des parties 122, 123 de largeur Li égale à 0.4 mm formant chacune une incision. Intercalées à intervalle régulier par rapport à cette première série, une seconde série de découpures comprend une pluralité de découpures 13 comportant deux parties 132, 133 de même largeur 8 mm et de profondeur Pt' égale à 12 mm pour former des zones en creux, ces dernières encadrant une partie médiane 131 formant une incision de largeur 0.4 mm.

Les découpures 12, 13 réalisées dans la nervure 10 présentent dans la direction transversale de la nervure et dans l'épaisseur de cette nervure une alternance de zones en creux et d'incisions comme cela est visible sur les figures 5 et 6 montrant respectivement des coupes suivant V-V et VI-VI de la bande de roulement à l'état neuf (telle que montrée sur la figure 4).

Par commodité, on n'a représenté qu'une seule alternance dans l'épaisseur de la bande, il est toutefois aisé pour l'homme du métier d'étendre une telle solution au cas d'une pluralité de zones en creux de largeur supérieure à 2 mm combinées à une pluralité d'incisions de largeur inférieure à 2 mm.

Préférentiellement, la largeur moyenne de chaque partie des découpures formant une incision est inférieure ou égale à 0.6 mm et l'épaisseur moyenne de chaque partie des découpures formant une zone en creux est au moins égale à 3 mm.

Après usure de la bande de roulement en roulage correspondant sensiblement à une diminution de l'épaisseur de la bande de roulement équivalente à la profondeur de 12 mm des zones en creux débouchant sur la surface de roulement à l'état neuf - comme cela est visible sur la figure 7- les parties formant des incisions 122, 123, 132, 133 des première et seconde série de découpures 12, 13 deviennent des zones élargies de profondeur de 12 mm tandis que les parties larges 121 deviennent des zones étroites 121' semblables aux premières incisions, étant entendu que le volume total des zones en creux, quel que soit le niveau d'usure de la bande de roulement jusqu'à une profondeur au plus égale à 75% de l'épaisseur totale de bande à user, est toujours supérieur au volume initial des zones en creux du pneumatique à l'état neuf.

De cette manière, la bande selon l'invention a, à l'état neuf, une rigidité plus élevée qu'une même bande de roulement ayant un même nombre de découpures de largeur comprise entre 4 et 16 mm et de profondeur égale à l'épaisseur de ladite bande. Ceci est atteint en conservant une rigidité sous effort tangent à la surface de la bande en contact ledit effort étant dirigé circonférentiellement.

Sur la figure 5, il est apparent que les zones en creux 131' formées sous la surface de roulement de la bande à l'état neuf sont prévues pour apparaître avant que les zones en creux 121 débouchant sur la surface de roulement de la bande à l'état neuf ne disparaissent, de manière à ce que la sculpture conserve tout au long de son utilisation suffisamment de zones en creux afin de présenter des performances satisfaisantes en roulage sur chaussée recouverte d'eau par exemple.

Avantageusement les incisions peuvent être zigzagantes dans au moins une direction ou présenter sur les parois les délimitant des motifs en creux et en relief destinés à s'imbriquer les uns dans les autres de manière à réaliser un blocage mécanique desdites parois en particulier dans le contact de la bande de roulement avec la chaussée. Les découpures de la sculpture selon l'invention peuvent en outre présenter des inclinaisons différentes de zéro avec une perpendiculaire à la surface de roulement ainsi que des directions moyennes en surface de roulement qui ne sont pas rectilignes mais adoptent toute géométrie appropriée.

La variante qui vient d'être décrite avec le support des figures 4 à 7 peut être appliquée au cas d'une bande de roulement ne présentant pas de rainure d'orientation longitudinale : dans un tel cas, les découpures peuvent ou non affecter la totalité de la largeur de ladite bande.

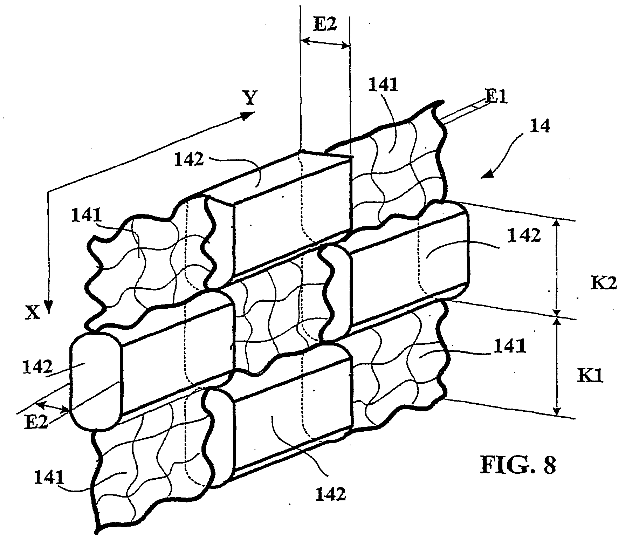

La figure 8 montre partiellement un élément moulant 14 destiné à équiper un moule moulant une bande de roulement selon l'invention. Cet élément moulant 14 est construit autour d'un plan moyen, l'épaisseur de l'élément moulant étant perpendiculaire à ce plan moyen ; l'élément moulant comprend une première région (non représentée sur la figure) destinée à être ancrée dans un moule et une seconde région (visualisée sur la figure 8) destinée à faire saillie à la surface de moulage du moule pour mouler une découpure dans une bande de gomme. La seconde région de l'élément moulant comprend une pluralité de parties 141, 142 d'épaisseurs moyennes différentes, ces parties étant réparties de manière alternée dans deux directions comprises dans le plan moyen dudit élément et perpendiculaires entre elles (ces directions sont repérées par X et Y sur la figure 8).

La pluralité de parties d'épaisseurs moyennes différentes comprend des parties minces 141 d'épaisseur moyenne E1 égale à 0.6 mm des parties épaisses 142 d'épaisseur E2 moyenne égale à 4 mm. À l'interface entre la partie de l'élément moulant représentée et la partie de cet élément moulant destinée à être ancrée dans le moule, on trouve une partie d'épaisseur moyenne E2 encadrée par deux parties d'épaisseur E1. Les parties d'épaisseur moyenne E 1 ont des géométries présentant de multiples ondulations à la fois dans la direction X et dans la direction Y. Une partie d'épaisseur moyenne E1 égale à 0.6 mm est prolongée dans l'une et l'autre des directions X et Y par une partie d'épaisseur moyenne E2 égale à 4 mm ; les hauteurs respectives K1 et K2 de chaque partie sont sensiblement identiques dans le cas présent. Par hauteur d'une région on entend la longueur de ladite région mesurée dans une direction sensiblement perpendiculaire à la surface de moulage du moule lorsque l'élément est en place sur ledit moule (dans le cas présent dans une direction parallèle à la direction X).

Préférentiellement, le rapport entre les épaisseurs moyennes des parties épaisses 142 et des parties minces 141 est inférieur à 10 pour faciliter le démoulage. Des zones de raccordement d'épaisseur variable peuvent en outre être prévues entre les parties minces et les parties épaisses pour faciliter le démoulage.

## Revendications

1. Bande de roulement (1) dont une surface externe est destinée à constituer la surface de roulement d'un pneumatique pour venir en contact avec la chaussée pendant le roulage du pneumatique, cette bande de roulement (1), ayant une épaisseur maximale Pb pouvant être usée en roulage et étant pourvue d'une pluralité de découpures (12,13) d'orientation essentiellement transversale, cette bande de roulement comprend au moins une nervure pourvue d'une pluralité de découpures, chaque découpure, vue sur la surface de roulement à l'état neuf, ayant :
- au moins une première partie (121, 132, 133) de largeur supérieure à 2 mm et de profondeur Pt comprise entre 30% et 80% de la profondeur totale de ladite découpure, ladite partie (121, 132, 133) formant une zone en creux étant prolongée dans l'épaisseur de la bande par au moins une partie (121', 132', 133') de largeur inférieure à 2 mm formant une incision,
- au moins une deuxième partie (122, 123, 131) de largeur inférieure à 2 mm et de profondeur comprise entre 30% et 80% de la profondeur totale de ladite découpure, cette deuxième partie (122, 123, 131) formant une incision et étant dans le prolongement axial de la première partie (121, 132, 133), cette deuxième partie (122, 123, 131) étant prolongée dans l'épaisseur de la bande par au moins une partie (122', 123', 131') de largeur supérieure à 2 mm pour former une nouvelle zone en creux,
- l'ensemble des zones en creux débouchant sur la surface de roulement constituent un volume total en creux au moins égal à 10% du volume de la bande à user,
cette bande de roulement (1) étant **caractérisée en ce que**, après une usure homogène égale ou supérieure à la profondeur de la première partie (121, 132, 133), le volume total des zones en creux débouchant sur la surface de roulement est compris entre 80% et 150% du volume initial total des zones en creux débouchant sur la surface de roulement à l'état neuf et **en ce que** la largeur moyenne des parties des découpures formant une incision (121', 132', 133') est inférieure à 2 mm et **en ce que** l'épaisseur moyenne des parties des découpures formant des zones en creux (122', 123', 131') est supérieure ou égale à 2 mm et au plus égale à dix fois l'épaisseur moyenne des parties des découpures formant une incision.

2. Bande de roulement (1) selon la revendication 1 **caractérisée en ce que** largeur moyenne de chaque partie des découpures formant une incision (121', 132', 133') est inférieure ou égale à 0.6 mm et **en ce que** l'épaisseur moyenne de chaque partie des découpures formant une zone en creux (122', 123', 131') est au moins égale à 3 mm.

3. Bande de roulement (1) selon l'une des revendications 1 ou 2 **caractérisée en ce que** au moins une des parties des découpures formant des incisions est délimitée par deux parois de gomme pourvues de moyens pour permettre en engrènement d'une paroi sur l'autre afin de limiter au moins certains mouvements relatifs entre lesdites parois.

4. Pneumatique pourvu d'une bande de roulement selon l'une quelconque des revendications 1 à 3, ledit pneumatique étant destiné à équiper un essieu moteur d'un véhicule poids lourd.

5. Élément moulant (14) destiné à équiper un moule pour mouler une découpure dans une bande de roulement de pneumatique, cet élément moulant (14) comprenant une première région destinée à l'ancrage de l'élément moulant dans un moule de pneumatique et une seconde région destinée à faire saillie à la surface de moulage du moule pour mouler une découpure dans une bande de gomme, cet élément moulant étant **caractérisé en ce que** la seconde région est formée d'une pluralité de parties minces (141) d'épaisseur moyenne inférieure à 2 mm et d'une pluralité de parties épaisses (142) d'épaisseur moyenne supérieure ou égales à 2 mm, au moins une partie mince étant prolongée dans deux directions distinctes par une partie épaisse.

6. Élément moulant (14) selon la revendication 5 **caractérisé en ce que** les régions épaisses (142) ont une épaisseur moyenne (E2) au plus égale à dix fois l'épaisseur moyenne (E1) des parties minces (141) pour faciliter le démoulage.

## Patentansprüche

1. Lauffläche ( 1 ), von der eine Außenfläche dazu bestimmt ist, die Abrollfläche eines Luftreifens zu bilden, die während des Rollens des Luftreifens mit der Straße in Kontakt kommen soll, wobei diese Lauffläche ( 1 ) eine maximale Dicke Pb hat, die während des Rollens abgenutzt werden kann, und mit mehreren im wesentlichen quer ausgerichteten Ausschnitten (12, 13) versehen ist, wobei diese Lauffläche mindestens eine Rippe aufweist, die mit mehreren Ausschnitten versehen ist, wobei jeder Ausschnitt auf der Abrollfläche im Neuzustand gesehen aufweist:
- mindestens einen ersten Bereich (121, 132, 133) mit einer Breite von mehr als 2 mm und einer Tiefe Pt zwischen 30% und 80% der Gesamttiefe des Ausschnitts, wobei der Bereich (121, 132, 133) eine Hohlzone bildet, die in der Dicke der Lauffläche von mindestens einem Bereich (121', 123', 131') mit einer Breite von weniger als 2 mm verlängert wird, der einen Einschnitt bildet,
- mindestens einen zweiten Bereich (122, 123, 131) mit einer Breite von weniger als 2 mm und einer Tiefe zwischen 30% und 80% der Gesamttiefe des Ausschnitts, wobei dieser zweite Bereich (122, 123, 131) einen Einschnitt bildet und sich in der axialen Verlängerung des ersten Bereichs (121, 132, 133) befindet, wobei dieser zweite Bereich (122, 123, 131) in der Dicke der Lauffläche von mindestens einem Bereich (122', 123', 131') mit einer Breite von mehr als 2 mm verlängert wird, um eine neue Hohlzone zu bilden,
- die Gesamtheit der an der Abrollfläche mündenden Hohlzonen ein Gesamthohlraumvolumen von mindestens 10% des Volumens der abzunutzenden Lauffläche bildet,
wobei diese Lauffläche (11) **dadurch gekennzeichnet ist, dass** nach einer homogenen Abnutzung gleich oder von mehr als der Tiefe des ersten Bereichs (121, 132, 133), das Gesamtvolumen der an der Abrollfläche mündenden Hohlzonen zwischen 80% und 150% des ursprünglichen Gesamtvolumens der im Neuzustand an der Abrollfläche mündenden Hohlzonen liegt, und dass die mittlere Breite der Bereiche der Ausschnitte, die einen Einschnitt (121', 132', 133') bilden, unter 2 mm liegt, und dass die mittlere Dicke der Bereiche der Hohlzonen (122', 123', 131') bildenden Ausschnitte mindestens 2 mm beträgt und höchstens zehn mal so groß ist wie die mittlere Dicke der einen Einschnitt bildenden Bereiche der Ausschnitte.

2. Lauffläche (1) nach Anspruch 1, **dadurch gekennzeichnet, dass** die mittlere Breite jedes einen Einschnitt (121', 132', 133') bildenden Bereichs der Ausschnitte höchstens gleich 0,6 mm ist, und dass die mittlere Dicke jedes eine Hohlzone (122', 123', 131') bildenden Bereichs der Ausschnitte mindestens gleich 3 mm ist.

3. Lauffläche (1) nach einem Ansprüche 1 oder 2, **dadurch gekennzeichnet, dass** mindestens einer der Einschnitte bildenden Bereiche der Ausschnitte von zwei Gummiwänden begrenzt wird, die mit Mitteln versehen sind, um ein Eingreifen einer Wand in die andere zu ermöglichen, um zumindest bestimmte relative Bewegungen der Wände zueinander zu begrenzen.

4. Luftreifen, der mit einer Lauffläche nach einem der Ansprüche 1 bis 3 ausgestattet ist, wobei der Luftreifen dazu bestimmt ist, eine Antriebsachse eines Schwerlastwagens zu bestücken.

5. Formelement (14), das dazu bestimmt ist, ein Formwerkzeug zum Formen eines Ausschnitts in einer Lauffläche eines Luftreifens zu bestücken, wobei dieses Formelement (14) eine erste Region, die zur Verankerung des Formelements in einem Luftreifen-Formwerkzeug bestimmt ist, und eine zweite Region aufweist, die dazu bestimmt ist, an der Formgebungsfläche des Formwerkzeugs vorzustehen, um einen Ausschnitt in einem Gummistreifen zu formen, **dadurch gekennzeichnet, dass** die zweite Region von mehreren dünnen Bereichen (141) mit einer mittleren Dicke von weniger als 2 mm und von mehreren dicken Bereichen (142) mit einer mittleren Dicke von mindestens 2 mm gebildet wird, wobei mindestens ein dünner Bereich in zwei unterschiedlichen Richtungen von einem dicken Bereich verlängert wird.

6. Formelement (14) nach Anspruch 5, **dadurch gekennzeichnet, dass** die dicken Bereiche (142) eine mittlere Dicke (E2) aufweisen, die höchstens zehnmal so groß ist wie die mittlere Dicke (E1) der dünnen Bereiche (141), um das Entformen zu erleichtern.

## Claims

1. A tread (1), an outer surface of which is intended to constitute the running surface of a tyre for coming into contact with the roadway during travel of the tyre, this tread (1), having a maximum thickness Pb which can become worn during travel and being provided with a plurality of cutouts (12, 13) of essentially transverse orientation, this tread comprises at least one rib provided with a plurality of cutouts, each cutout, viewed on the running surface when new, having:
- at least one first part (121, 132, 133) of width greater than 2 mm and of depth Pt of between 30% and 80% of the total depth of said cutout, said part (121, 132, 133) forming a hollowed zone being extended into the thickness of the tread by at least one part (121', 132', 133') of width less than 2 mm forming an incision,
- at least one second part (122, 123, 131) of width less than 2 mm and of depth of between 30% and 80% of the total depth of said cutout, this second part (122, 123, 131) forming an incision and being in the axial extension of the first part (121, 132, 133), this second part (122, 123, 131) being extended into the thickness of the tread by at least one part (122', 123', 131') of width greater than 2 mm to form a new hollowed zone,
- all the hollowed zones opening on to the running surface constitute a total hollow volume at least equal to 10% of the volume of the tread to become worn,
this tread (1) being **characterised in that**, after homogenous wear equal to or greater than the depth of the first part (121, 132, 133), the total volume of the hollowed zones opening on to the running surface is between 80% and 150% of the total initial volume of the hollowed zones opening on to the running surface when new, and **in that** the average width of the parts of the cutouts forming a incision (121', 132', 133') is less than 2 mm and **in that** the average thickness of the parts of the cutouts forming hollowed zones (122', 123', 131') is greater than or equal to 2 mm and at most equal to ten times the average thickness of the parts of the cutouts forming an incision.

2. A tread (1) according to Claim 1, **characterised in that** [the] average width of each part of the cutouts forming a incision (121', 132', 133') is less than or equal to 0.6 mm and **in that** the average thickness of each part of the cutouts forming a hollowed zone (122', 123', 131') is at least equal to 3 mm.

3. A tread (1) according to one of Claims 1 or 2, **characterised in that** at least one of the parts of the cutouts forming incisions is defined by two walls of rubber provided with means for permitting meshing of one wall with the other in order to limit at least certain relative movements between said walls.

4. A tyre provided with a tread according to any one of Claims 1 to 3, said tyre being intended to be fitted on a driving axle of a heavy vehicle.

5. A moulding element (14) intended to be fitted on a mould for moulding a cutout in a tyre tread, this moulding element (14) comprising a first region intended for anchoring the moulding element in a tyre mould and a second region intended to protrude from the moulding surface of the mould for moulding a cutout in a rubber tread, this moulding element being **characterised in that** the second region is formed of a plurality of thin parts (141) of average thickness less than 2 mm and of a plurality of thick parts (142) of average thickness greater than or equal to 2 mm, at least one thin part being extended in two distinct directions by a thick part.

6. A moulding element (14) according to Claim 5, **characterised in that** the thick regions (142) have an average thickness (E2) at most equal to ten times the average thickness (E1) of the thin parts (141) in order to facilitate demoulding.
